# FASCICULE DE BREVET EUROPEEN

(11) **EP 0 800 760 B1**
(45) Date de publication et mention de la délivrance du brevet: **24.07.2002**
(21) Numéro de dépôt: 97400807.0
(22) Date de dépôt: 08.04.1997
(51) Int. Cl.: A01F 29/00, A01F 25/20, A01K 5/00

(54) **Machine distributrice de fourrage, ensilage ou autres, perfectionnée**
Futter- oder Silageverteilmaschine und ähnliches
Forage or silage distributor and similar

(30) Priorité: 10.04.1996 FR 9604467
(43) Date de publication de la demande: 15.10.1997
(73) Titulaire: JEANTIL S.A., F-35590 l'Hermitage (FR)
(72) Inventeur: Jeantil, Philippe, 35132 Vezin Le Coquet (FR)
(74) Mandataire: Jacobson, Claude

(56) Documents cités:
- EP-A- 0 574 942
- FR-A- 2 501 130
- FR-A- 2 585 535
- FR-A- 2 636 204
- FR-A- 2 726 967

## Description

La présente invention est relative aux matériels d'élevage, tels que désileuses, pailleuses, mélangeuses ou autres.

Ces machines comportent généralement une caisse sur laquelle est articulée une griffe destinée à permettre à la fois le chargement de la caisse par sa partie arrière et la fermeture de celle-ci une fois qu'elle est chargée, un fond mobile de déplacement des produits contenus dans la caisse vers l'avant de celle-ci et un dispositif de démêlage des produits contenus dans la caisse qui se présentent par exemple sous forme d'ensilage, de balles rondes ou parallélèpipédiques, de paille, de foin ou analogues.

Les dispositifs de démêlage utilisés jusqu'à présent dans de telles machines, sont des dispositifs de démêlage à cylindres rotatifs munis de doigts de démêlage, des dispositifs de démêlage à convoyeurs à éléments d'entraînement sans fin munis de doigts d'entraînement des brins du produit à distribuer, et des dispositifs démêleurs à turbines à doigts démêleurs et pales.

Bien que de telles machines donnent généralement de bons résultats, elles ne peuvent assurer un désilage et une distribution efficaces que dans la mesure où les débits qui leur sont demandés ne sont pas trop importants.

Le brevet français FR-A-2714568 décrit une machine perfectionnée distributrice de fourrage, ensilage ou autre, ayant un rendement amélioré et capable d'assurer la distribution de produits de désilage avec un débit accru et brins longs par rapport à celui que sont capables de délivrer les machines connues.

Cette machine comporte une caisse de réception de produits à distribuer, un fond mobile et un dispositif de démêlage et de distribution du produit.

Selon un mode de réalisation, le dispositif de démêlage et de distribution comporte deux convoyeurs superposés à éléments d'entraînement sans fin munis de doigts d'entraînement des brins du produit et une turbine à pales longues de création d'un courant d'aspiration de l'intérieur de la caisse vers la sortie de celle-ci, les convoyeurs étant disposés de façon inclinée vers le haut à partir du fond mobile.

L'invention vise à réaliser une machine distributrice qui tout en ayant des performances similaires à celles de la machine à deux convoyeurs, soit d'un prix de revient moins important.

Elle a donc pour objet une machine distributrice de fourrage, ensilage ou autres, comportant une caisse de réception de produits à distribuer, un fond mouvant et un dispositif de démêlage et de distribution du produit, comportant un convoyeur de démêlage à élément d'entraînement sans fin muni de doigts d'entraînement des brins du produit et une turbine à pales longues de création d'un courant d'aspiration de l'intérieur de la caisse vers la sortie de celle-ci, le convoyeur étant disposé de façon inclinée vers le haut à partir du fond mobile, caractérisée en ce qu'elle comporte en outre au moins un cylindre de démêlage disposé au-dessus du convoyeur de démêlage à élément d'entraînement sans fin.

L'invention sera mieux comprise à la lecture de la description qui va suivre, donnée uniquement à titre d'exemple et faite en se référant aux dessins annexés, sur lesquels :
- la Fig.unique est une vue schématique en coupe partielle d'une machine désileuse suivant l'invention.

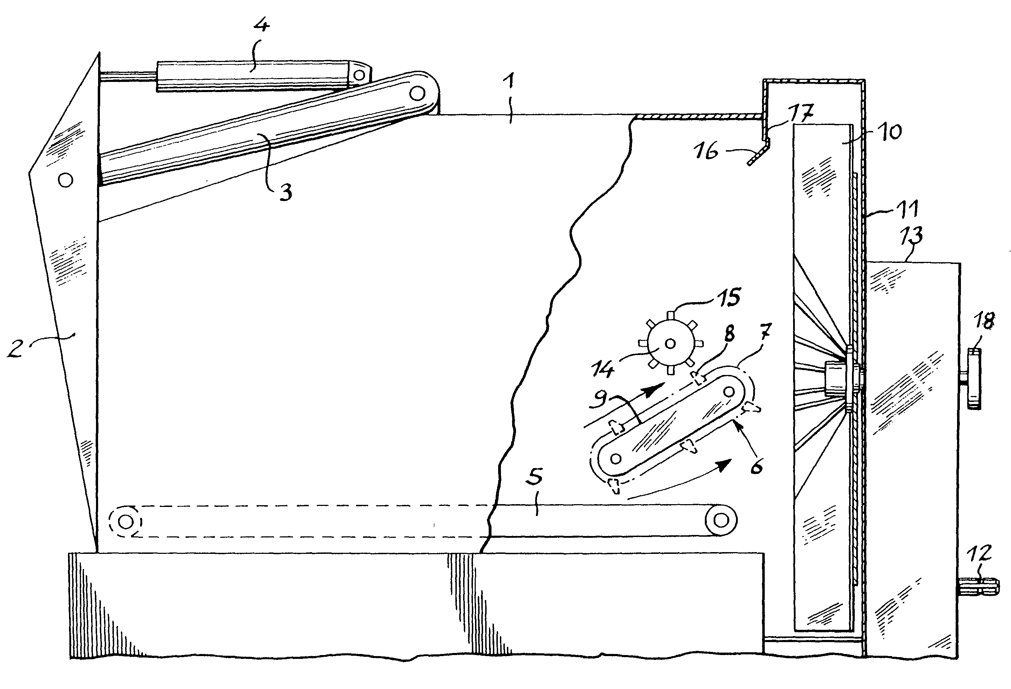

La machine représentée sur la figure est par exemple une désileuse. Elle comporte une caisse 1 équipée d'une griffe 2 de préhension et de chargement dans la caisse de produits sous forme d'ensilage, de balles cylindriques, parallélépipédiques ou autres.

La griffe 2 est articulée sur la caisse par des bras 3 actionnés par des vérins 4.

Cette griffe sert également de porte arrière pour la caisse.

Dans la caisse est en outre monté un fond mobile 5 de type connu qui se déplace longitudinalement pour amener l'ensilage vers la partie avant de la caisse.

La machine comporte de plus un dispositif de démêlage et de distribution qui, suivant l'invention, comporte un convoyeur sans fin 6 comportant des éléments d'entraînement sans fin tels que des chaînes 7 munies de doigts 8 d'entraînement des brins de l'ensilage.

Un tel convoyeur est par exemple décrit au brevet français FR-A-2563687 dont les doigts d'entraînement des brins sont disposés à intervalles réguliers sur des barrettes transersales fixées aux chaînes d'entraînement sans fin.

De façon avantageuse, le convoyeur 6 comporte un carter de carénage en tôle 9.

Le convoyeur sans fin 6 est disposé de façon inclinée vers le haut à partir du fond mobile 5.

Son extrémité opposée au fond mobile 5 se trouve en regard d'une turbine 10 d'aspiration et d'éjection des produits démêlés par le convoyeur 6. Cette turbine est disposée dans une volute 11 prévue à l'extrémité de la caisse 1 opposée à la griffe 2 et entraînée par un arbre 12 destiné à être relié à une prise de force d'un tracteur non représenté, par l'intermédiaire d'une boîte de vitesses 13 pourvue d'un levier 18 de changement de rapport.

Au-dessus du convoyeur sans fin est disposé un cylindre rotagif de démêlage 14 pourvu de dents 15 pour assurer en combinaison avec le convoyeur 6, un démêlage plus efficace des brins de l'ensilage contenu dans la caisse 1, mais également pour participer au guidage de l'air aspiré par la turbine hors de la caisse 1 vers la volute 11 et la sortie de celle-ci.

Le bord supérieur du cylindre de démêlage 14 est disposée à proximité d'un becquet 16 de guidage de l'air et des brins de produit démêlés, faisant saillie à partir de la paroi intérieure 17 de la volute 11.

Grâce à l'efficacité conjuguée du démêlage obtenu à l'aide du convoyeur sans fin 6 et du cylindre de démêlage 14 et à l'aspiration améliorée par la présence de la turbine 10 à pales longues, on obtient une machine qui délivre du fourrage, de l'ensilage ou d'autres produits avec une régularité et un débit accru par rapport à ceux que l'on peut obtenir avec les machines classiques.

La combinaison d'un convoyeur oblique et d'un cylindre de démêlage permet de réaliser une machine distributrice de fourrage moins coûteuse qu'une machine à deux convoyeurs obliques ayant les mêmes performances.

Bien que dans l'exemple qui vient d'être décrit, la machine comporte un cylindre de démêlage associé au convoyeur sans fin, la machine peut également être réalisée avec deux cylindres de démêlage disposés l'une au-dessus de l'autre, associés au convoyeur sans fin.

## Revendications

1. Machine distributrice de fourrage, ensilage ou autres, comportant une caisse (1) de réception de produits à distribuer, un fond mouvant (5) et un dispositif de démêlage et de distribution du produit, comportant un convoyeur de démêlage (6) à élément d'entraînement sans fin muni de doigts (8) d'entraînement des brins du produit et une turbine (10) à pales longues de création d'un courant d'aspiration de l'intérieur de la caisse vers la sortie de celle-ci, le convoyeur de démêlage (6) étant disposé de façon inclinée vers le haut à partir du fond mobile, **caractérisée en ce qu'**elle comporte en outre au moins un cylindre de démêlage (14) disposé au-dessus du convoyeur de démêlage (6) à élément d'entraînement sans fin.

2. Machine suivant la revendication 1, comportant en outre un becquet (16) de guidage de l'air et des brins de produit démêlés, **caractérisée en ce que** le becquet est disposé à proximité du bord supérieur du cylindre de démêlage (14).

3. Machine suivant l'une des revendications 1 et 2, **caractérisée en ce qu'**elle comporte deux cylindres de démêlage disposés l'un au-dessus de l'autre, associés au convoyeur de démêlage (6) à élément d'entraînement sans fin.

## Patentansprüche

1. Verteilmaschine für Futter, Silage oder anderes, welche einen Aufnahmebehälter (1) für die zu verteilenden Produkte, einen sich bewegenden Boden (5) und eine Vorrichtung zum Trennen und Verteilen des Produktes aufweist, welche eine Fördervorrichtung (6) zum Trennen mit Hilfe eines Endlosmitnahmeteils mit Zinken (8) für die Mitnahme der Halme des Produkts und eine Turbine (10) mit langen Blättern zur Erzeugung eines Ansaugstromes vom Innern des Behälters zu dessen Ausgang aufweist, wobei die Fördervorrichtung (6) zum Trennen vom sich bewegenden Boden nach oben geneigt angeordnet ist,
**dadurch gekennzeichnet,**
**daß** die Maschine ferner einen über der Fördervorrichtung (6) zum Trennen mit Hilfe des Endlosmitnahmeteils angeordneten Trennzylinder (14) aufweist.

2. Maschine nach Anspruch 1, welche ferner ein Blatt (16) zur Führung der Luft und der getrennten Produkthalme aufweist,
**dadurch gekennzeichnet,**
**daß** das Blatt In der Nähe des oberen Randes des Trennzylinders (14) angeordnet ist.

3. Maschine nach einem der Ansprüche 1 und 2, **gekennzeichnet durch** zwei übereinander angeordnete, der Fördervorrichtung (6) zum Trennen mit Hilfe des Endlosmitnahmeteils zugeordnete Trennzylinder aufweist.

## Claims

1. Forage, silage or similar dispensing machine comprising a container (1) to take the products to be dispensed, a moving bottom (5) and a product disentangling and dispensing device comprising a disentangling conveyor belt with endless drive fitted with dogs (8) for driving the sprigs of the product and a long-bladed turbine (10) that creates a suction draught from the inside of the casing to its outlet, the disentangling conveyor (6) being angled upwards from the moving bottom, **characterised in that** it has in addition at least one disentangling roller (14) arranged above the endless drive disentangling conveyor (6).

2. Machine according to Claim 1 having in addition a lipped part (16) for guiding the air and the disentangled product sprigs, **characterised in that** the lipped part is arranged in the vicinity of the upper edge of the disentangling roller (14).

3. Machine according to one of the Claims 1 and 2, **characterised in that** it has two disentangling rollers arranged one above the other, associated with the endless drive disentangling conveyor (6).
